# EUROPEAN PATENT SPECIFICATION

(11) **EP 1 707 410 B1**
(45) Date of publication and mention of the grant of the patent: **18.02.2009**
(21) Application number: 06005800.5
(22) Date of filing: 22.03.2006
(51) Int. Cl.: B60H 1/00

(54) **Control operation device for air conditioner of vehicle**
Bedienteil für eine Fahrzeugklimaanlage
Dispositif de commande pour un climatiseur d'un véhicule

(30) Priority: 31.03.2005 JP 2005103209
(43) Date of publication of application: 04.10.2006
(73) Proprietor: U-Shin Ltd., Tokyo 1050012 (JP)
(72) Inventor: Miyata, Soichi c/o U-shin Ltd., Tokyo 105-0012 (JP)
(74) Representative: Eisenführ, Speiser & Partner

(56) References cited:
- DE-A1- 19 947 528
- DE-B3- 10 315 974
- GB-A- 2 390 416

## Description

### TECHNICAL FIELD

The present invention relates to a control operation device for air conditioning of vehicles such as automobiles.

### BACKGROUND ART

As is widely known, the operation panel provided in front of the driver's seat in automobiles includes an air conditioner control operation device for operating dial knobs to control the air conditioner unit.

In GB 2 390 416 A a control arrangement for a vehicle heating, ventilation or air-conditioning system is disclosed comprising two rotary control devices that may be mounted coaxially. There is an outer control, that independently rotates around an inner control nested within it. The two controls may be separated by a non-rotating spacer ring having position indicator symbols on its surface. The outer control may be used to operate a switch controlling fan speed, or a gear sector driving a wire for operating a temperature control. This outer ring has a limited rotation range due to the non-rotating support struts that in addition to limiting the rotation of the outer ring, also support the spacer ring. The inner control device has no limit to its degree of rotation, and is connected via a stem to its main output shaft to control the relevant function in the HVAC system such as distribution of airflow to the vehicle cabin.

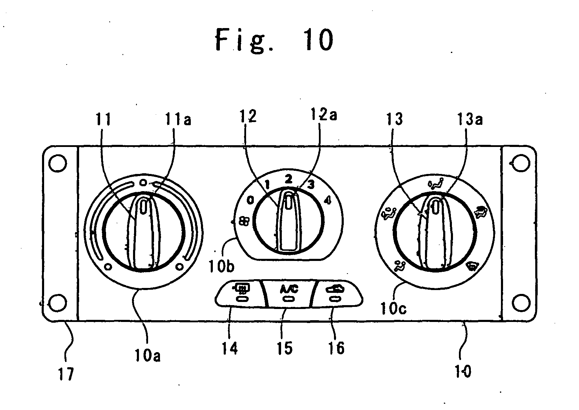

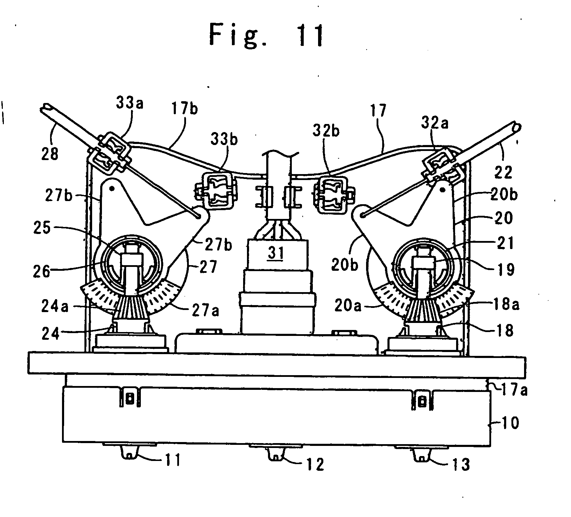

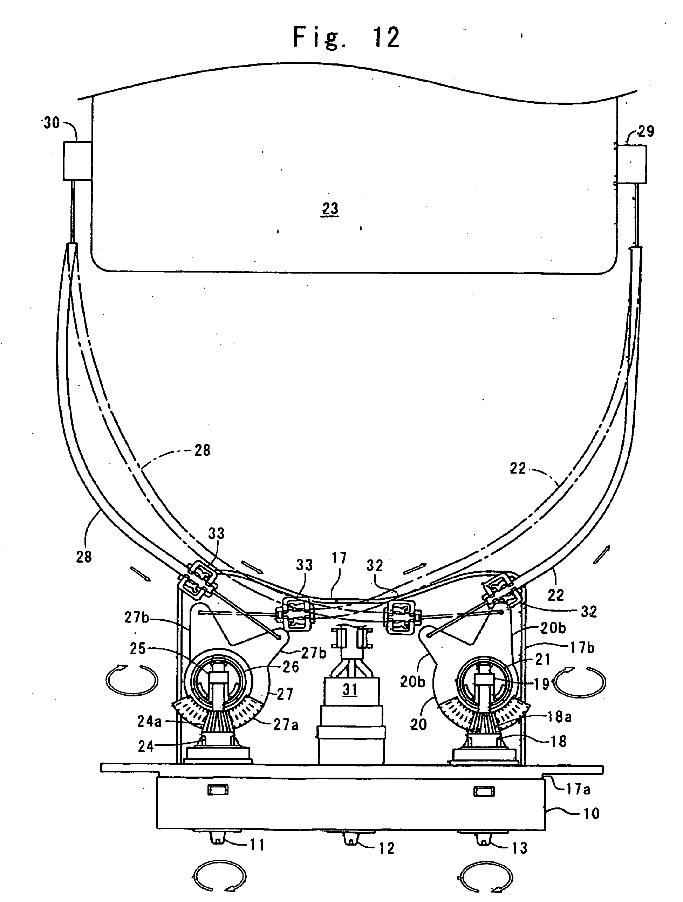

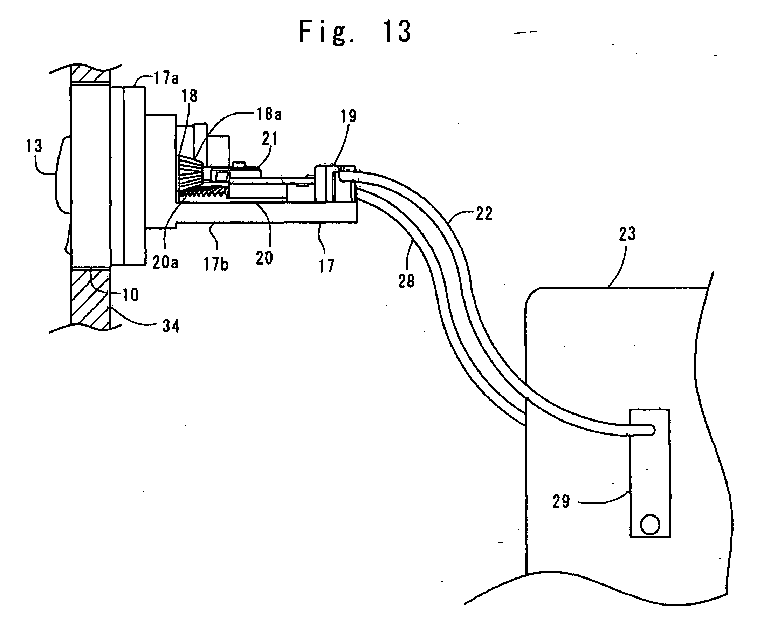

Fig. 10 is a front view of an air conditioner control operation device shown as a prior art example. Fig. 11 is a plan view of the air conditioner control operation device. Fig. 12 is a plan view showing a state that the air conditioner control operation device is connected to an air conditioner unit. Fig. 13 is a side view showing a state that the air conditioner control operation device is connected to an air conditioner unit as in Fig. 12.

As shown in the figures, in this air conditioner control operation device, an operation panel 10 has a temperature-control dial knob 11, an air-flow-control dial knob 12 and a mode-selection dial knob 13, all of these being provided rotatable, as well as switch buttons of a rear defroster switch 14 for energizing the heating coil of the rear window to make the rear window defrosted, an air conditioner switch 15 for selecting a mode of the air conditioner, and an inside/outside air selection switch 16 for selecting inside-air circulation or outside-air intake.

The operation panel 10 is fitted to a housing portion 17a provided on the front face side of a base 17 by engagement of upper two spots and lower two spots. Further, gear shafts 24, 18 of the dial knobs 11, 13 are rotatably borne on a base portion 17b which is provided integral with the housing portion 17a so as to be vertically extended therefrom.

More specifically, the dial knob 13 is shafted at one end portion of the gear shaft 18, and a bevel gear 18a is provided on the gear shaft 18. The other end portion of the gear shaft 18 is borne by a bearing portion 19 provided on the base 17. Then, the bevel gear 18a is meshed with a gear portion 20a of a gear lever 20 so that rotation of the dial knob 13 is transferred to the gear lever 20.

The gear lever 20 is rotatably held on a cylindrical-shaped pivot portion 21 formed in the base portion 17b. A control cable 22 for controlling an air conditioner unit 23 is coupled to arm portions 20b of the gear lever 20.

Therefore, by rotating the dial knbb 13 to make its indicator 13a selectively adjusted to an indicating scale 10c, the gear lever 20 linked with the bevel gear 18a is rotated, by which the control cable 22 is driven so as to be pushed out or turned back. Thus, a mode selection for the air conditioner unit 23 is fulfilled.

Also for the dial knob 11, a cable control mechanism similar to the above-described one is provided.

More specifically, the gear shaft 24, to one end portion of which the dial knob 11 is shafted, has the other end portion borne by a bearing portion 25. Also, a bevel gear 24a provided on the gear shaft 24 is meshed with a gear portion 27a of a gear lever 27 which is rotatably held by a pivot portion 26, and besides a control cable 28 is coupled to arm portions 27b of the gear lever 27.

Therefore, by rotating the dial knob 13 to make its indicator 11a moved along an indicating portion 10a, the gear lever 27 linked with the bevel gear 24a is rotated, by which the control cable 28 is moved back and forth. Thus, temperature control of the air conditioner unit 23 is exerted.

With regard to the above-described air conditioner control operation device, as shown in Fig. 12, the control cable 22 is coupled to a link lever 29 which controls mode selection for the air conditioner unit 23, and the control cable 28 is coupled to a link lever 30 which controls an unshown air mix door of the air conditioner unit 23.

That is, the air conditioner unit 23 is controlled by rotating the individual link levers 29, 30 through push-out drive and pull-back drive of the control cables 22, 28.

Further, the dial knob 12 is coupled to a rotary switch 31. By rotating the dial knob 12 to make its indicator 12a selectively adjusted to an indicating scale 10b, a switch signal of the rotary switch 31 is fed to the air conditioner unit 23. Thus, air flow control is implemented.

### SUMMARY OF THE INVENTION

As described above, in common automobiles, the operation panel 10 having the dial knobs 11, 12, 13 provided thereon is provided as an air conditioner control operation part in an inner panel 34 in the vehicle (see Fig. 13) .

Meanwhile, the air conditioner unit 23, which is controlled by the air conditioner control operation part, is set on the rear face side of the inner panel 34 in the vehicle.

In the base 17 of the prior-art air conditioner control operation device, since the base portion 17b is provided integrally with the housing portion 17a so as to be vertically extended from the housing portion 17a, to which the operation panel 10 is to be fitted, the control cables 22, 28 are arranged so as to be directed outward horizontally to the fitting direction of the operation panel 10 as shown in Fig. 12.

Therefore, in the case where the air conditioner unit 23 is placed below on the rear side with respect to the air conditioner control operation device as shown in Fig. 13, the control cables 22, 28 have to be once bent inward and further bent downward in order that the control cables 22, 28 are coupled to the link levers 29, 30 of the air conditioner unit 23.

Accordingly, in the air conditioner control operation device having the base 17, of which the base portion 17b is fixed to the housing portion 17a, to which the operation panel 10 is to be fitted, since the control cables 22, 28 are limited in their wiring direction, there has been a problem that the control cables 22, 28 would increase in sliding resistance due to the bend of the control cables 22, 28, depending on the position where the air conditioner unit 23 is placed, resulting in dulled rotation of the dial knobs 11, 13.

Besides, with an air conditioner control operation device to which different specifications such as right-hand drive cars and left-hand drive cars are set among different countries or districts even in identical automobile models, the control cables 22, 28 result in a cable wiring direction represented by one-dot chain line for right-hand drive cars and in a cable wiring direction represented by solid line for left-hand drive cars as shown in Fig. 11. Thus, there are cases where the control cables 22, 28 result in opposite wiring directions between right and left.

In the prior-art air conditioner control operation device, in order to meet different specifications that involve right-left reversed wiring directions of the control cables 22, 28 in any identical vehicle model as shown above, the arm portions 20b, 27b for coupling of the control cables 22, 28 of the gear levers 20, 27 are provided so as to be projected toward different directions. Moreover, cable holding portions 32, 33 positioned along the tangential direction on the rotational circumferences of the individual arm portions 20b, 27b to serve for holding of tip ends of the control cables 22, 28 are provided at two spots on the base portion 17b, respectively, for the arm portions 20b, 27b (see Fig. 11).

However, as a result of the right-left reversal of the wiring directions of the control cables 22, 28, push-out drive and pull-back drive of the control cables 22, 28 with respect to the rotational direction of the dial knobs 11, 13 are also reversed.

More specifically, in the case where the control cable 22 is arranged along a wiring direction for left-hand drive cars represented by solid line as shown in Fig. 11, rotating the dial knob 13 clockwise causes the gear lever 20 to rotate clockwise similarly, thus making the control cable 22 driven for push-out.

On the other hand, in the case where the control cable 22 is arranged along a wiring direction for right-hand drive cars represented by one-dot chain line, rotating the dial knob 13 similarly clockwise causes the gear lever 20 to rotate clockwise as well, thus making the control cable 22 driven for pull-back.

Therefore, one air conditioner control operation device cannot be used, as it is, in common to vehicles having the setting that push-out drive and pull-back drive of the control cable 22 for rotating operation of the dial knob 13 remain the same when the wiring direction of the control cable 22 is right-left reversed responsive to different specifications.

Consequently, with a view to meeting such specifications, there has been a need for setting variations for the air conditioner control operation device according to the wiring direction of the control cable 22 even with vehicle of the same model.

In view of the above-described circumstances, an object of the present invention is to provide an air conditioner control operation device which can be used in common for vehicles of different specifications by imparting a degree of freedom to the wiring direction of the control cable.

In order to achieve the above object, in a first aspect of the present invention, there is proposed a control operation device for use with an air conditioner of a vehicle, for controlling an air conditioner unit by operating an operation knob provided on an operation panel, comprising: an operation knob which is fitted to the operation panel so as to be rotatable on a pivot shaft implemented by an output shaft having a gear portion; a link member which has a gear portion meshable with the gear portion of the output shaft and which operates according to rotating operation of the operation knob; a control cable which couples the link member and the air conditioner unit to each other and which controls the air conditioner unit according to an operation of the link member responsive to the rotating operation of the operation knob; a housing in which the operation panel is fitted to a front face portion of the housing and by which the output shaft is rotatably held; and a base member having a pivot portion on which the link member is rotatably held, wherein the base member is fittable to a fitting surface formed on one face side of the housing at a plurality of different fitting angles thereto.

In a second aspect of the invention, there is proposed a control operation device for use with an air conditioner of a vehicle as defined in the first aspect, further comprising a fitting mechanism for holding the base member to the fitting surface of the housing at a plurality of different fitting angles centered on the output shaft.

In a third aspect of the invention, there is proposed a control operation device for use with an air conditioner of a vehicle as defined in the second aspect, wherein the fitting mechanism is composed of fitting mechanism parts formed in the housing and the base member, respectively.

In a fourth aspect of the invention, there is proposed a control operation device for use with an air conditioner of a vehicle as defined in the third aspect, wherein the fitting mechanism includes the fitting mechanism part, and a fixing member for fixing the base member to the housing.

In a fifth aspect of the invention, there is proposed a control operation device for use with an air conditioner of a vehicle as defined in any one of the first to fourth aspects, wherein at least two of the operation knobs pivotally held by the output shaft are provided on the operation panel, and the link member and the base member are provided for each of their respective output shafts independently, and each of the base members is fittable to the fitting surface of the housing at a plurality of different fitting angles.

In a sixth aspect of the invention, there is proposed a control operation device for use with an air conditioner of a vehicle as defined in any one of the first to fifth aspects, wherein the base member is provided with at least two cable holding portions for holding the control cable.

According to the control operation device for use with an air conditioner of a vehicle in the first aspect, since the link member, by which the link member is rotatably held, can be fitted to the fitting surface of the housing at a plurality of fitting angles, the wiring direction of the control cable can be given a degree of freedom.

As a result of this, the control operation device for use with an air conditioner of a vehicle can be used in common to vehicles of different specifications.

As in the control operation device for use with an air conditioner of a vehicle in the second aspect, with the provision of the fitting mechanism for holding the base member to the fitting surface of the housing at a plurality of different fitting angles centered on the output shaft, the gear portion of the output shaft and the gear portion of the link member can reliably be coupled to each other so that the base member can be fitted to the fitting surface of the housing at a plurality of different fitting angles.

In the control operation device for use with an air conditioner of a vehicle in the third aspect, the fitting mechanism is composed of fitting mechanism parts formed in the housing and the base member, respectively.

In the control operation device for use with an air conditioner of a vehicle in the fourth aspect, since the fitting mechanism includes the fitting mechanism part, and a fixing member for fixing the base member to the housing, the base member can be fixed to the housing without rattling.

The control operation device for use with an air conditioner of a vehicle in the fifth aspect is characterized in that at least two operation knobs pivotally held on the output shafts are provided on the operation panel, and that the link member and the base member are provided for each of their respective output shafts independently, and each of the base members is fittable to the housing at a plurality of different fitting angles.

In the control operation device for use with an air conditioner of a vehicle in the sixth aspect, the base member is provided with at least two cable holding portions for holding the control cable, thereby allowing the control cables to be selectively fitted depending on the wiring direction. As a result, the control cables can be selectively arranged without increasing variations of the base.

### BRIEF DESCRIPTION OF THE DRAWINGS

The present invention will be described in more detail with reference to the following accompanying drawings, in which same component parts are designated by same reference numerals:
Fig. 1 is a perspective view showing an embodiment of the air conditioner control operation device, which is to be provided in an inner panel of an automobile;
Fig. 2 is an exploded perspective view of the air conditioner control operation device;
Fig. 3 is a sectional view taken along the line A - A of Fig. 1;
Fig. 4 is a perspective view showing a control section of the air conditioner control operation device;
Fig. 5 is a plan view showing a state that the air conditioner control operation device is connected to an air conditioner;
Fig. 6 is a rear perspective view showing another fitting example of the control section of the air conditioner control operation device;
Fig. 7 is a rear perspective view showing still another fitting example of the control section of the air conditioner control operation device;
Fig. 8A is a perspective view showing a fitting mechanism for the control section of the air conditioner control operation device;
Fig. 8B is a perspective view showing a fitting mechanism for the control section of the air conditioner control operation device;
Fig. 9 is an exploded rear perspective view showing a still another fitting example of the control section of the air conditioner control operation device;
Fig. 10 is a front view of an air conditioner control operation device shown as a prior art example;
Fig. 11 is a plan view of the air conditioner control operation device shown as the prior art example;
Fig. 12 is a plan view showing a state that the air conditioner control operation device shown as the prior art example is connected to an air conditioner; and
Fig. 13 is a side view showing a state that the air conditioner control operation device shown as the prior art example is connected to an air conditioner.

### DETAILED DESCRIPTION OF THE PREFERRED EMBODIMENTS

Embodiments of the present invention will be described below with reference to the accompanying drawings.

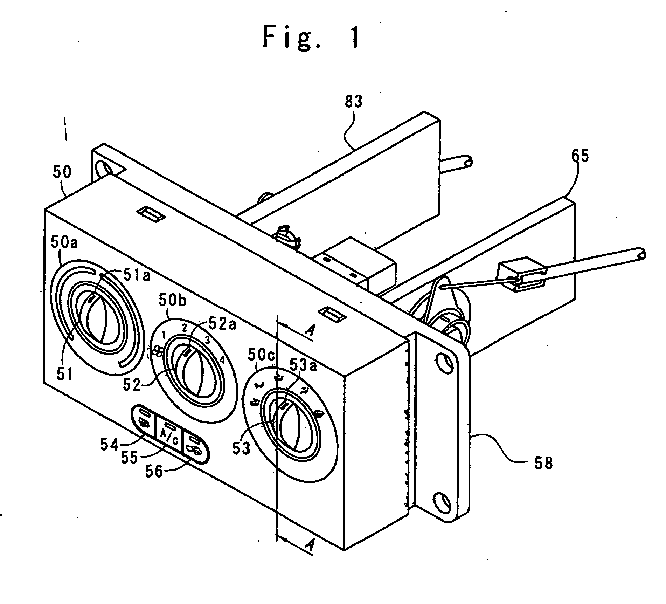

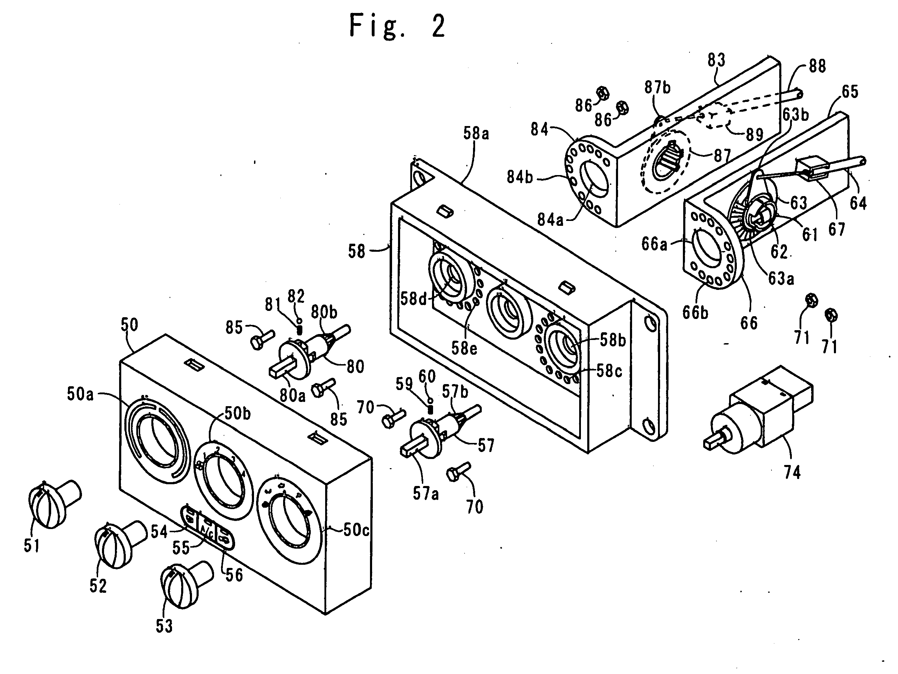

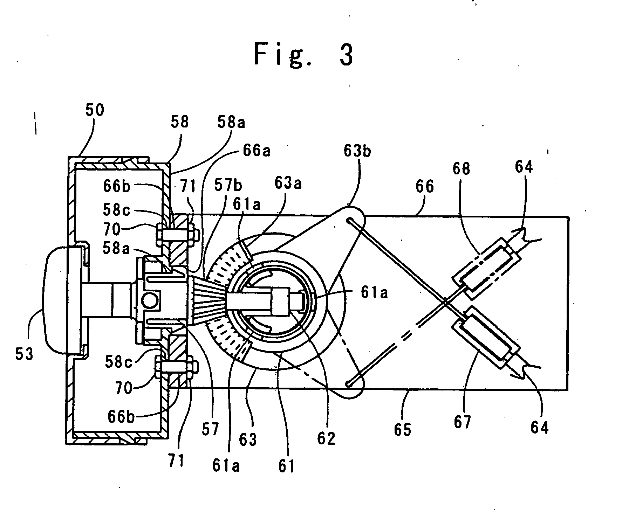

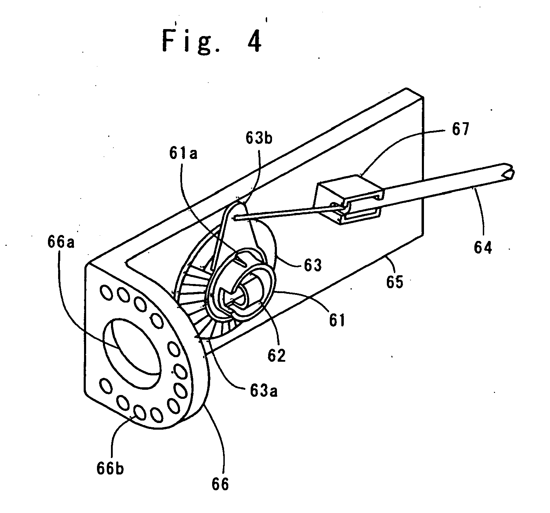

Fig. 1 is a perspective view showing an embodiment of the air conditioner control operation device, which is to be provided in an inner panel of an automobile. Fig. 2 is an exploded perspective view of the air conditioner control operation device. Fig. 3 is a sectional view taken along the line A - A of Fig. 1. Fig. 4 is a perspective view showing a control section of the air conditioner control operation device.

As shown in Fig. 1, the air conditioner control operation device of the present invention has a display panel 50 (operation panel) attached to a housing 58 on its front face side. On the display panel 50 are provided, as listed from its one side, a temperature-control dial knob 51, an air-flow-control dial knob 52 and a mode-selection dial knob 53 as operation knobs.

Also, on the lower side of the dial knobs 51, 52, 53 in the display panel 50 are provided switch buttons of a rear defroster switch 54, an air conditioner switch 55, and an inside/outside air selection switch 56.

Then, the dial knobs 51, 52, 53 are enabled to operate temperature control, air flow control and mode selection by its indicators 51a, 52a, 53a being selectively adjusted to the indicator scales, respectively.

Control means of the air conditioner control operation device of the invention to be coupled to the above-mentioned dial knob 53 is explained with reference to Figs. 2 and 3.

First, the dial knob 53 is to be attached integrally by being fitted into a rectangular-in-cross-section shaft portion 57a formed on one side of a gear shaft 57, which is an output shaft.

Then, the housing 58 has a fitting surface 58a provided on its rear side so that the gear shaft 57 is rotatably held at a shaft hole 58b formed in the fitting surface 58a of the housing 58. Also, a small ball 60 to which projective biasing force is imparted by a spring 59 is provided at a midway portion of the gear shaft 57. This small ball 60 and a plurality of unshown recesses formed in the housing 58 constitute a click mechanism, so that fitting the gear shaft 57 to a shaft hole 58d gives a feeling of moderation to rotational positions (positions of the indicator scale) of the dial knob 53.

Further, the gear shaft 57 is provided with a bevel gear 57b, and a rear end portion of the gear shaft 57 is borne by a bearing portion 62 provided at a center of a later-described pivot portion 61.

Meanwhile, the bevel gear 57b of the gear shaft 57 is so formed that a gear portion 63a (bevel gear) of a gear lever 63, which is a linked member, can be meshed therewith.

The gear lever 63 is so structured that its arm portion 63b, to which a control cable 64 can be coupled, is radially projectively provided and rotatably held at a cylindrical pivot portion 61 projectively formed on one face side of a base member 65.

As shown in Fig. 4, the base member 65 is formed so as to be separate from the housing 58, i.e., as a separate member. The base member 65 has a vertically extending fitting plate 66 provided thereto integrally, and a through hole 66a is formed at a center of the fitting plate 66.

The bearing portion 62 for bearing the rear end portion of the gear shaft 57 projecting from the through hole 66a is provided at the pivot portion 61 of the base member 65 described above.

A plurality (three in this embodiment) of outwardly projecting engagement claws 61a are provided at the pivot portion 61 so as to allow the gear lever 63 to be rotatably fitted thereto by one-touch operation.

Also, the base member 65 is provided with a cable holding portion 67 for holding the control cable 64 along a tangential direction on the rotational circumference of the arm portion 63b of the gear lever 63.

As shown above, the base member 65, the gear lever 63 and the control cable 64 serve a role as a control means for controlling the air conditioner unit 75.

In this embodiment, the cable holding portion 67 is provided at only one place on the base member 65. However, with a cable holding portion 68 provided symmetrically with respect to a center line of the pivot portion 61 as shown by one-dot chain line in Fig. 3, the control cable 64 may be selectively arranged according to a fitting angle of the base member 65 to the wiring direction of the control cable 64.

The base member 65 structured as described above is fitted to the fitting surface 58a of the housing 58, by which the gear lever 63 is linked with the bevel gear 57b of the gear shaft 57 that rotates integrally with the dial knob 53, the gear lever 63 being rotated about the pivot portion 61 to drive the control cable 64 for push-out or pull-back.

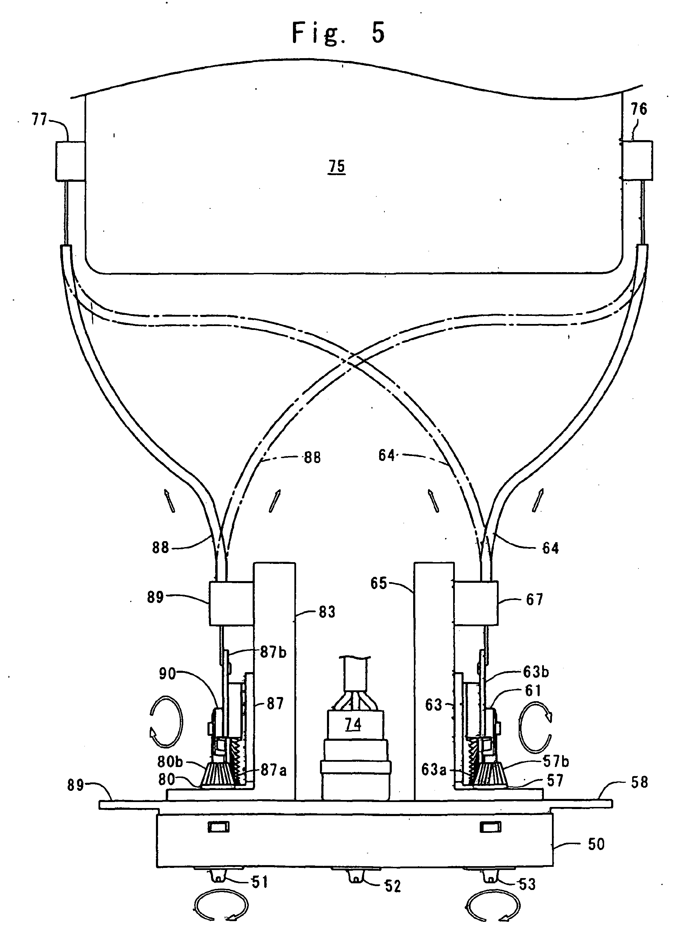

As a result of this, as shown in Fig. 5, a link lever 76 which controls mode selection for the air conditioner unit 75 coupled to the control cable 64 is rotated, by which mode selection control for the air conditioner unit 75 is fulfilled.

Next, the base member 65 and a fitting mechanism of the housing 58 are described.

As shown in Figs. 2 and 4, in the fitting plate 66 of the base member 65, a plurality of fixing holes 66b are provided on a concentric circumference of the through hole 66a formed at the center of the fitting plate 66.

On the other hand, in the fitting surface 58a formed on the rear face side of the housing 58, a plurality of fitting holes (fitting mechanism part) 58c are provided on a concentric circumference of the shaft hole 58b, to which the gear shaft 57 is to be shafted, in such a manner that the fitting holes 58c coincide with the aforementioned fixing holes 66b of the base member 65 along the rotational direction.

A circumference formed by interconnecting the center points of the fixing holes 66b around the through hole 66a, and a circumference formed by interconnecting the center points of the fitting holes 58c around the shaft hole 58b, are equal in diameter to each other, where the fixing holes 66b and the fitting holes 58c are formed at constant angles on the circumferences, respectively.

As shown in Figs. 3, 4 and 6, for the fitting of the base member 65 to the housing 58, the base member 65 is rotated to a fitting angle responsive to the wiring direction of the control cable 64 so that the fitting plate 66 is brought into close contact with the fitting surface 58a of the housing 58. Then, fixing holes 66b and fitting holes 58c corresponding to the fitting angle are selected, where the base member 65 can be fixed to the housing 58 with screws (fixing member) 70 and nuts (fixing member) 71.

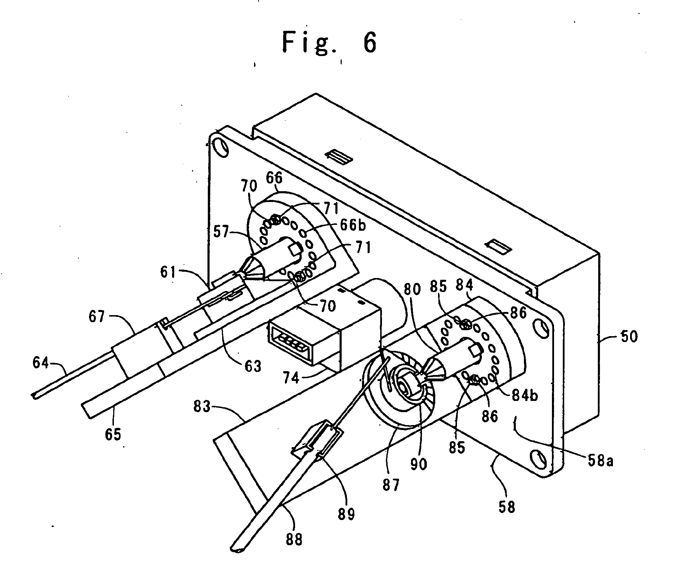

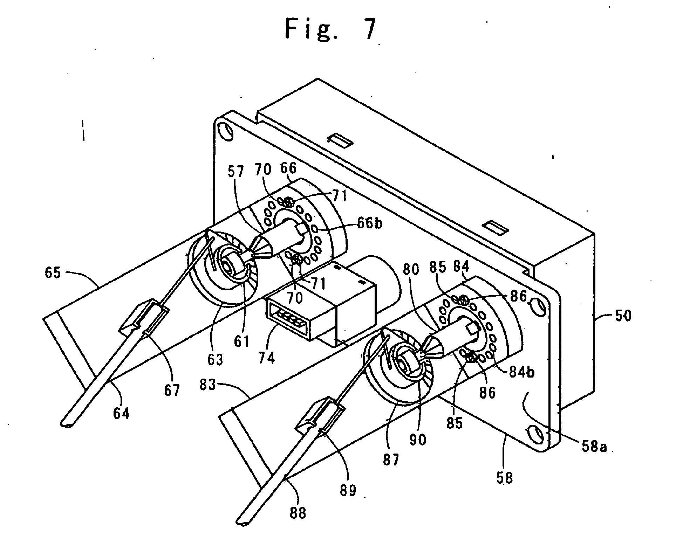

With such a structure as shown above, the base member 65 can be rotated in a plurality of different angles and fitted to the fitting surface 58a of the housing 58 according to the wiring direction of the control cable 64 as shown in Figs. 6 and 7.

In this embodiment, cater-cornered two places of fixing holes 66b and fitting hole 58c are fixed by the screws 70 and the nuts 71. Otherwise, three or more places of fixing holes 66b and fitting holes 58c may be fixed.

In addition, although the fixation may be done at one fixing place, yet it is preferable that two or more places of fixing holes 66b and fitting holes 58c are fixed.

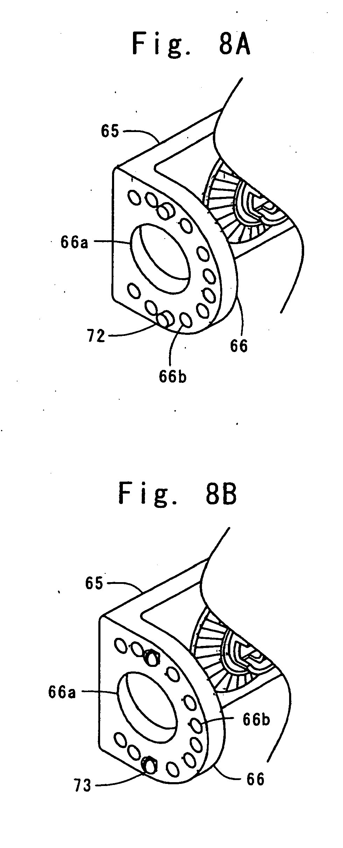

Further, as shown in Figs. 8A and 8B, columnar protruding portions 72 press-fittable to fitting holes 58c, or engagement claw portions 73 elastically engageable with fitting holes 58c, may be provided in the fitting plate 66 of the base member 65 so as to protrude therefrom.

With such a structure as shown above, the base member 65 can be simply fitted to the housing 58.

Further, for more strong fixation of the base member 65 to the housing 58, after the fitting with the aforementioned protruding portions 72 or engagement claw portions 73, other fixing holes 66b and fitting holes 58c may be fixed by screws 70 and nuts 71.

As shown above, the fitting plate 66 and fixing holes 66b of the base member 65, the fitting holes 58c formed in the fitting surface 58a of the housing 58, the screws 70 and nuts 71 constitute a fitting mechanism.

In the case where the protruding portions 72 or the engagement claw portions 73 are provided in the base member 65, the screws 70 and the nuts 71 function as fixing members.

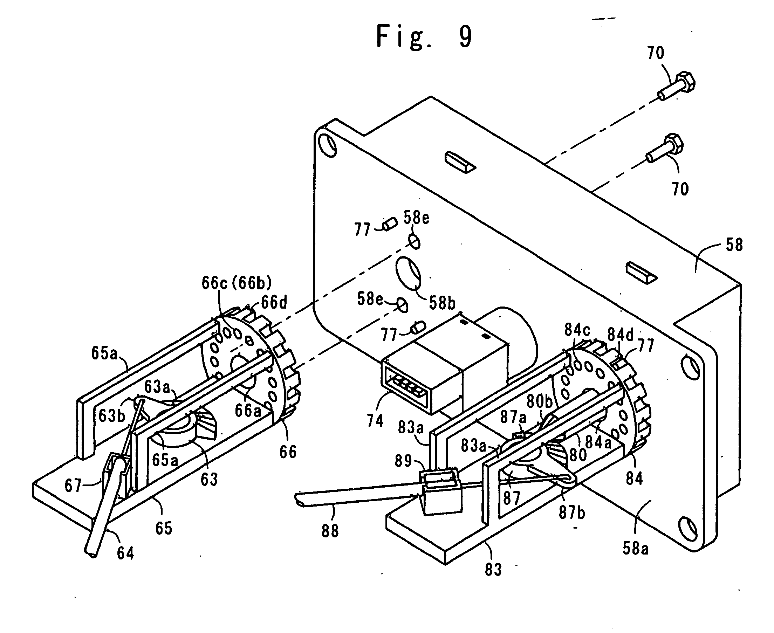

Also, instead of the fixing holes 66b, tapped holes 66c that allow the screws 70 to be directly screwed thereinto without using the nuts 71 may be provided in the fitting plate 66 as shown in Fig. 9. Further, for easier positioning of the base member 65 to the housing 58, protrusions 77 may be provided in the fitting surface 58a instead of the protruding portions 72 or the engagement claw portions 73.

In this case, the protrusions 77 may be inserted into the aforementioned fixing holes 66b or tapped holes 66c, or fitting recesses 66d for receiving the protrusions 77 may be provided independently of the tapped holes 66c in the fitting plate 66 as shown in the figure. The fitting recesses 66d may be holes similar to the fixing holes 66b.

In the embodiment shown in Fig. 9, a plurality of tapped holes 66c are arranged in the disc-shaped fitting plate 66 annularly at a constant pitch, and the fitting recesses 66d are provided on the outer periphery of the fitting plate 66 over its entire circumference at an angular interval equal to that of the tapped holes 66c. By virtue of this, the wiring direction of the control cable 64 can be set to any direction in steps of a specified angle according to the fitting angle of the base member 65.

Preferably, the protrusions 77 of the fitting surface 58a are provided at least two in number for determination of the fitting angle of the base member 65, and more preferably provided cater-corner as in this embodiment.

When the base member 65 and the fitting plate 66 are further coupled to each other with a reinforcement member 65a, the base member 65 is increased in strength so that the base member 65 can be prevented from deformation due to operational stress of the gear shaft 57 or the like. Therefore, in this case, there is no possibility that meshing between the bevel gear 57b of the gear shaft 57 and the gear portion 63a of the gear lever 63 may be released to make the control cable 64 inoperative.

Desirably, the reinforcement member 65a, as shown in Fig. 9, may be formed into such a skeletal or framed shape that side portions of the gear lever 63 are not sealed, in order that the base member 65, when rotated, does not interfere with the arm portion 63b regardless of rotation positions of the base member 65.

In addition, instead of the screws 70 and the nuts 71, an unshown adhesive tape or adhesive agent may be filled between the base member 65 and the housing 58 for their fixation.

With the air conditioner control operation device structured as described above, when the indicator 53a of the dial knob 53 is rotated so as to be selectively adjusted to an indicator scale 50c, the gear lever 63 linked with the gear portion 57b of the gear shaft 57 is rotated, by which the control cable 64 is driven for push-out or pull-back. As a result, a mode selection for the air conditioner unit 75 is fulfilled.

Next described is an embodiment of the air conditioner control operation device in the case where the push-out drive and pull-back drive for the control cables with respect to the rotational direction of the dial knob are of the same for vehicles to which different specifications for the wiring direction of the control cables are set, such as right-hand drive cars and left-hand drive cars.

In such a case in which different specifications are set, the base member 65 is fitted vertically to the fitting direction of the display panel 50 as shown in Fig. 1.

With such a structure as shown above, even if the wiring direction of the control cable 64 is right-left reversed depending on the specifications as shown in Fig. 5, the push-out drive and the pull-back drive for the control cable 64 with respect to the rotational direction of the dial knob 53 can be made identical to each other.

That is, even in a case where the control cable 64 is arranged along the solid-line direction shown in Fig. 5 for a left-hand drive car while the control cable 64 is arranged along a one-dot chain line direction for a right-hand drive car, the pull-out direction of the control cable 64 remains the same, so that push-out drive and pull-back drive of the control cable 64 of the dial knob 53 is never reversed.

For instance, in a case where the dial knob 53 is rotated clockwise, even if the wiring direction of the control cable 64 is right-left reversed, the gear lever 63 is activated clockwise as well, thus driving the control cable 64 for its push-out.

Whereas the mode-selection dial knob 53 has been described in the foregoing embodiment, yet the temperature-control dial knob 51 may be structured in the same way.

First, like the base member 65, a base material 83 separated from the housing 58 is provided as a separate member. Then, the base member 83 has a vertically extending fitting plate 84 provided thereto integrally, and a through hole 84a is formed at a center of the fitting plate 84.

At the through hole 84a, a rear end portion of the gear shaft 80 is projected so as to be borne by a bearing portion 89 provided on the base member 83. Also, the gear shaft 80 is rotatably held at the shaft hole 58d formed in the housing 58, and a small ball 82 to which projective biasing force is imparted by a spring 81 is provided at a midway portion of the gear shaft 80.

Then, the gear shaft 80, when fitted to the shaft hole 58d, constitutes a click mechanism in cooperation with a plurality of unshown recesses formed in the housing 58, giving a feeling of moderation to rotational positions (positions of the indicator scale) of the dial knob 51.

In the fitting surface 58a of the housing 58 are provided a plurality of fitting holes (fitting mechanism part) 58e on a concentric circumference of the shaft hole 58d, to which the gear shaft 80 is to be shafted. In the state that the fitting holes 58e are set coincident with a plurality of fixing holes 84b provided in a fitting plate 84 of the base member 83 on a concentric circumference of the through hole 84a, screws (fixing member) 85 are inserted into the fitting holes 58e and the base member 83 is fixed to the housing 58 with nuts (fixing member) 86. When this is done, a gear portion 80b of the gear shaft 80 is meshed with a gear portion 87a of a gear lever 87, and moreover a rear end portion of the gear shaft 80 is borne by the bearing portion.

As the dial knob 51 coupled to the control means structured as described above is rotated so as to be selectively adjusted to an indicator scale 50a, the gear lever 87 linked with the gear portion 80b of the gear shaft 80 is rotated, by which the control cable 88 is driven for push-out or pull-back. As a result, temperature control for the air conditioner unit 75 is fulfilled.

In the gear lever 87, an arm portion 87b to which a control cable 88 can be coupled is provided so as to be radially projected, being rotatably held at a cylindrical pivot portion 90 projectively formed on one face side of the base member 83.

The gear lever 87 may be provided in the same structure as the mode-selection side gear lever 63. Therefore, the gear levers 63, 87 may be used in common to each other.

Further, with such an arrangement that even if the wiring direction of the control cable 88 is right-left reversed depending on specifications on the temperature-control dial knob 51 side as shown in Fig. 5, push-out drive and pull-back drive for the control cable 88 are identical to each other with respect to the rotational direction of the dial knob 51, providing the cable holding portion 89 symmetrically with respect to the center line of the cylindrical pivot portion 90, like the cable holding portion 68 that holds the control cable 88 shown by one-dot chain line in Fig. 3, the base members 65, 83 can be provided in the same structure. Thus, all the component parts can be used in common to both mode selection use and temperature control use.

Further, a rotary switch is coupled to the air-flow-control dial knob 52 as in the prior art is rotated. By rotating the dial knob 52 to make its indicator selectively adjusted to an indicating scale 50b, a switch signal of the rotary switch 74 is fed to the air conditioner unit 75. Thus, air flow control is implemented.

In the air conditioner control operation device described above, the base members 65, 83 can be fitted to the housing 58 with their fitting angles selected according to the wiring direction of the control cables 64, 88.

That is, since the wiring direction of the control cables 64, 88 can be set freely, the control cables 64, 88 can be used in common to vehicles having a plurality of different specifications without increasing variations of component parts of the air conditioner control operation device.

### INDUSTRIAL APPLICABILITY

The air conditioner control operation device of the invention can be used as an air conditioner control operation device for air conditioner units which are to be mounted on vehicles such as automobile.

Although the present invention has been fully described by way of example with reference to the accompanying drawings, it is to be noted that various changes and modifications are apparent to those skilled in the art. Such changes and modifications are therefore to be understood as included within the present invention unless they depart from the scope of the present invention.

## Claims

1. A control operation device for use with an air conditioner of a vehicle, for controlling an air conditioner unit (75) by operating an operation knob (51, 52, 53) provided on an operation panel (50), comprising:
an operation knob (51, 52, 53) which is fitted to the operation panel (50) so as to be rotatable on a pivot shaft implemented by an output shaft (57, 80) having a gear portion (57b, 80b);
a link member (63, 87) which has a gear portion (63a, 87a) meshable with the gear portion (57b, 80b) of the output shaft (57, 80) and which operates according to rotating operation of the operation knob (51, 52, 53);
a control cable(64, 88) which couples the link member (63, 87) and the air conditioner unit (75) to each other and which controls the air conditioner unit (75) according to an operation of the link member (63, 87) responsive to the rotating operation of the operation knob (51, 52, 53);
a housing (58) in which the operation panel(50) is fitted to a front face portion of the housing (58) and by which the output shaft (57, 80) is rotatably held; and
a base member (65, 83) having a pivot portion on which the link member (63, 87) is rotatably held,
**characterized in that**
the base member (65, 83) is fittable to a fitting surface (58a) formed on one face side of the housing (58) at a plurality of different fitting angles thereto.

2. The control operation device for use with an air conditioner of a vehicle as claimed in Claim 1, further comprising
a fitting mechanism for holding the base member (65, 83) to the fitting surface (58a) of the housing (58) at a plurality of different fitting angles centered on the output shaft (57, 80).

3. The control operation device for use with an air conditioner of a vehicle as claimed in Claim 2, wherein
the fitting mechanism is composed of fitting mechanism parts (58c, 58e, 66b) formed in the housing (58) and the base member (65, 83), respectively.

4. The control operation device for use with an air conditioner of a vehicle as claimed in Claim 3, wherein
the fitting mechanism includes the fitting mechanism part (58c, 58e, 66b), and a fixing member (70, 85, 86) for fixing the base member (65, 83) to the housing (58).

5. The control operation device for use with an air conditioner of a vehicle as claimed in any one of Claims 1 to 4, wherein
at least two of the operation knobs (51, 52, 53) pivotally held by the output shaft (57, 80) are provided on the operation panel (50), and
the link member (63, 87) and the base member (65, 83) are provided for each of their respective output shafts (57, 80) independently, and each of the base members (65, 83) is fittable to the fitting surface (58a) of the housing (58) at a plurality of different fitting angles.

6. The control operation device for use with an air conditioner of a vehicle as claimed in any one of Claims 1 to 5, wherein
the base member (65, 83) is provided with at least two cable holding portions (67, 68, 89) for holding the control cable (64, 88).

## Patentansprüche

1. Bedieneinrichtung zur Anwendung mit einer Klimaanlage eines Fahrzeuges zum Steuern eines Klimaanlagengerätes (75) durch Betätigen eines an einem Armaturenbrett (50) vorgesehenen Bedienknopfes (51, 52, 53), umfassend:
einen Bedienknopf (51, 52, 53), der so an dem Armaturenbrett (50) montiert ist, dass er an einer Drehachse drehbar ist, die durch eine Abgangswelle (57, 80) mit einem Zahnradabschnitt (57b, 80b) implementiert ist;
ein Verbindungselement (63, 87), das einen Zahnradabschnitt (63a, 87a) besitzt, der mit dem Zahnradabschnitt (57b, 80b) der Abgangswelle (57, 80) in Eingriff bringbar ist, und das entsprechend dem Drehvorgang des Bedienknopfes (51, 52, 53) wirksam ist;
einen Steuerseilzug (64, 88), der das Verbindungselement (63, 87) und das Klimaanlagengerät (75) miteinander verbindet und der das Klimaanlagengerät (75) gemäß einer Wirkungsweise des Verbindungselementes (63, 87) ansprechend auf den Drehvorgang des Bedienknopfes (51, 52, 53) steuert;
ein Gehäuse (58), in das das Armaturenbrett (50) an einem Vorderflächenabschnitt des Gehäuses (58) eingesetzt ist, und durch das die Abgangswelle (57, 80) drehbar gehalten ist; und
ein Basiselement (65, 83), das ein Drehteil besitzt, an dem das Verbindungselement (63, 87) drehbar gehalten ist,
**dadurch gekennzeichnet, dass**
das Basiselement (65, 83) in eine an einer Vorderseite des Gehäuses (58) ausgebildete Einbaufläche (58a) zu dieser in einer Vielzahl unterschiedlicher Einbauwinkel einsetzbar ist.

2. Bedieneinrichtung zur Anwendung mit einer Klimaanlage eines Fahrzeuges gemäß Anspruch 1, außerdem umfassend
einen Einbaumechanismus zum Halten des Basiselementes (65, 83) an der Einbaufläche (58a) des Gehäuses (58) in einer Vielzahl unterschiedlicher Einbauwinkel, zentriert auf der Abgangswelle (57, 80).

3. Bedieneinrichtung zur Anwendung mit einer Klimaanlage eines Fahrzeuges gemäß Anspruch 2, bei der
der Einbaumechanismus aus in dem Gehäuse (58) bzw. dem Basiselement (65, 83) ausgebildeten Einbaumechanismusteilen (58c, 58e, 66b) gebildet ist.

4. Bedieneinrichtung zur Anwendung mit einer Klimaanlage eines Fahrzeuges gemäß Anspruch 3, bei der
der Einbaumechanismus das Einbaumechanismusteil (58c, 58e, 66b) und ein Befestigungselement (70, 85, 86) zum Befestigen des Basiselementes (65, 83) am Gehäuse (58) umfasst.

5. Bedieneinrichtung zur Anwendung mit einer Klimaanlage eines Fahrzeuges gemäß einem der Ansprüche 1 bis 4, bei der
mindestens zwei der drehbar durch die Abgangswelle (57, 80) gehaltenen Bedienknöpfe (51, 52, 53) am Armaturenbrett (50) vorgesehen sind, und
das Verbindungselement (63, 87) und das Basiselement (65, 83) unabhängig für jede ihrer entsprechenden Abgangswellen (57, 80) vorgesehen sind, und jedes der Basiselemente (65, 83) an der Einbaufläche (58a) des Gehäuses (58) in einer Vielzahl unterschiedlicher Einbauwinkel einsetzbar ist.

6. Bedieneinrichtung zur Anwendung mit einer Klimaanlage eines Fahrzeuges gemäß einem der Ansprüche 1 bis 5, bei der
das Basiselement (65, 83) mit mindestens zwei Seilhalteteilen (67, 68, 89) zum Halten des Steuerseilzuges (64, 88) versehen ist.

## Revendications

1. Dispositif de commande pour usage avec un climatiseur d'un véhicule, pour commander une unité de climatisation (75) en actionnant un bouton d'exploitation (51, 52, 53) pourvu sur un panneau d'exploitation (50), comprenant :
un bouton d'exploitation (51, 52, 53) qui est installé au niveau du panneau d'exploitation (50) de manière à être rotatif sur un arbre pivot mis en oeuvre par un arbre de sortie (57, 80) ayant une portion d'engrenage (57b, 80b);
un organe de liaison (63, 87) qui a une portion d'engrenage (63a, 87a) pouvant être engrenée avec la portion d'engrenage (57b, 80b) de l'arbre de sortie (57, 80) et qui fonctionne selon une manoeuvre en rotation du bouton d'exploitation (51, 52, 53);
un câble de commande (64, 88) qui raccorde l'organe de liaison (63, 87) et l'unité de climatisation (75) l'un à l'autre et qui commande l'unité de climatisation (75) selon un fonctionnement de l'organe de liaison (63, 87) sensible à la manoeuvre en rotation du bouton d'exploitation (51, 52, 53);
un logement (58) dans lequel le panneau d'exploitation (50) est installé à une portion frontale avant du logement (58) et par lequel l'arbre de sortie (57, 80) est maintenu en rotation; et
un organe de base (65, 83) ayant une portion pivot sur laquelle l'organe de liaison (63, 87) est maintenu en rotation,
**caractérisé en ce que**
l'organe de base (65, 83) peut être installé à une surface d'installation (58a) formée sur un côté de face du logement (58) à une pluralité de différents angles d'installation correspondants.

2. Dispositif de commande pour usage avec un climatiseur d'un véhicule comme revendiqué dans la revendication 1, comprenant en plus
un mécanisme d'installation pour maintenir l'organe de base (65, 83) à la surface d'installation (58a) du logement (58) à une pluralité de différents angles d'installation centrés sur l'arbre de sortie (57, 80).

3. Dispositif de commande pour usage avec un climatiseur d'un véhicule comme revendiqué dans la revendication 2, dans lequel
le mécanisme d'installation est composé de parties de mécanisme d'installation (58c, 58e, 66b) formées dans le logement (58) et l'organe de base (65, 83), respectivement.

4. Dispositif de commande pour usage avec un climatiseur d'un véhicule comme revendiqué dans la revendication 3, dans lequel
le mécanisme d'installation inclut la partie de mécanisme d'installation (58c, 58e, 66b), et un organe de fixation (70, 85, 86) pour fixer l'organe de base (65, 83) au logement (58).

5. Dispositif de commande pour usage avec un climatiseur d'un véhicule comme revendiqué dans l'une quelconque des revendications 1 à 4, dans lequel
au moins deux parmi les boutons d'exploitation (51, 52, 53) maintenus de manière pivotante par l'arbre de sortie (57, 80) sont pourvus sur le panneau d'exploitation (50), et
l'organe de liaison (63, 87) et l'organe de base (65, 83) sont pourvus, indépendamment, pour chacun de leurs arbres de sorties respectifs (57, 80), et chacun des organes de base (65, 83) peut être installé à la surface d'installation (58a) du logement (58) à une pluralité de différents angles d'installation.

6. Dispositif de commande pour usage avec un climatiseur d'un véhicule comme revendiqué dans l'une quelconque des revendications 1 à 5, dans lequel
l'organe de base (65, 83) est pourvu d'au moins deux portions de maintien de câble (67, 68, 89) pour maintenir le câble de commande (64, 88).
